Europäisches Patentamt

European Patent Office

Office européen des brevets

(11) Publication number: **0 295 448 B1**

(12) **EUROPEAN PATENT SPECIFICATION**

(45) Date of publication of patent specification: **12.08.92**   (51) Int. Cl.⁵: **B65G 57/06**, B21F 33/00

(21) Application number: **88108009.7**

(22) Date of filing: **19.05.88**

(54) **Stacking machine for wire mesh.**

(30) Priority: **16.06.87 IT 6038687 U**

(43) Date of publication of application:
**21.12.88 Bulletin 88/51**

(45) Publication of the grant of the patent:
**12.08.92 Bulletin 92/33**

(84) Designated Contracting States:
**AT BE CH DE ES FR GB GR IT LI LU NL SE**

(56) References cited:
EP-A- 0 042 833     DE-A- 2 014 707
DE-A- 3 136 950     FR-A- 2 340 783
FR-A- 2 397 352     US-A- 2 606 483
US-A- 3 061 066

(73) Proprietor: **IMPIANTI INDUSTRIALI Spa
Zona Industriale - Rivoli
I-33010 Osoppo (UD)(IT)**

(72) Inventor: **Saro, Giancarlo
Via Cavalieri di Vittorio Veneto 44
I-33035 Ceresetto Di Martignacco (UD)(IT)**

(74) Representative: **Petraz, Gilberto Luigi
GLP S.r.l. Piazzale Cavedalis 6/2
I-33100 Udine(IT)**

Rank Xerox (UK) Business Services

## Description

The present invention relates to a stacking machine for wire mesh according to the preamble of claim 1. Such a machine is known from document DE-A-2.014.707.

The main application of such a machine is in the field of stacking of electrically welded mesh of the type used in building work or fencing and the like.

The stacking machine according to the invention serves to arrange stacks of mesh or elements coming from the preparation line and then to enable such stacks to be discharged.

The stacking machine disclosed in document DE-A-2,014,707 may comprise a discharge roller conveyor supported on a base frame and cooperating with a vertically movable bed.

Above the conveyor are included transient retractable supports which serve to uphold transiently the mesh or products arriving until such time as the mesh or products are positioned; the supports are then displaced and the mesh or products drop onto the stack being formed.

However, such known machines entail a set of not unimportant drawbacks. The longer the mesh or panels forming the stack, the longer the discharge time and therefore the longer the downtime of the production line so as to enable the formed stack to be fully and properly discharged.

For instance, in a production line for electrically welded mesh which produces about eight mesh units a minute, each unit having a length of about three metres, in packages of twenty-five meshes, about three minutes are required to form a package, whereas the discharge time amounts to about one minute. The discharge time, therefore, reduces the output of the line by about 20-25%.

Document EP-A-0.042.833 discloses a stacker for electrically welded building mesh comprising a roller conveyor for discharging a mesh stack, retractable mesh supports and frontal retractable guides for positioning the mesh.

This kind of stacker has the same drawbacks which have already been pointed out referring to the stacker described in DE-A-2.014.707.

Document US-A-2.606.483 discloses an apparatus for stacking of roofing shingles comprising a discharging roller conveyor and a bed receiving said roofing shingles coming from a chute, said bed being movable in a vertical plane and retractable beneath said roller conveyor.

At the time when the roofing shingles are delivered on the roller conveyor, an auxiliary plate is operated, which receives the roofing shingles coming from the chute and stacks a predetermined number of them by means of guides provided for this special purpose; when the bed has come back to a position suitable for receiving a stack of roofing shingles, said auxiliary plate is retracted and the stack of roofing shingles is delivered on the bed.

Document US-A-3.061.066 discloses a stacker for asphalt tiles, vynil tiles, cork tiles or rubber tiles comprising a discharging roller conveyor and a bed suitable for receiving said tiles coming from a working unit, said bed being movable in a vertical plane and being retractable beneath said roller conveyor. At the time when a predetermined number of tiles has been delivered on the bed, an auxiliary plate is operated, which intercepts the tiles which are still coming from the working unit, until the tiles which are on the bed have been discharged on the roller conveyor and the bed has come back to its raised position. Then the auxiliary plate is retracted and the stack of tiles is delivered on the bed.

Document DE-A-3.136.950 discloses a printed circuit board (PCB) stacking device comprising a discharging carriage and a bed suitable for receiving said PCBs as they come from a roller conveyor, said bed being movable in a vertical plane and being retractable beneath the stacking plane of said carriage. When a predetermined number of said PCBs has been delivered on said bed, an auxiliary plate is operated, which intecepts the PCBs which are still coming from said roller conveyor, until the PCBs which are on the bed have been discharged on the carriage and the bed has come back to its raised position. Then the auxiliary plate is retracted and the stack of PCBs is delivered on the bed.

Document FR-A-2.340.783 discloses a device for stacking electrical machine laminations cut by means of a punch press comprising a stacking channel realised in the press die and a mandrel for vertically guiding the laminations cooperating with a stacking tabel movable in a vertical plane. A jack controls the entry of a cursor within the channel in order to create an intermediate stack.

The devices according to the above mentioned documents US-A-2.606.483, US-A-3.061.066, DE-A-3.136.950 and FR-A-2.340.783 relate to, respectively, fields of application, technologies and problems which differ fundamentally from those involved with the subject-matter of the present application.

In fact, the problems associated with the stacking of electrically welded fire meshes, the sizes and the weight of which are widely larger than those of roofing shingles, tiles or printed circuit boards, which involve different and not comparable technologies. For instance, it may be noted that none of the mentioned documents (except those which deal specifically with the stacking of wire meshes, as DE-A-2.014.707 and EP-A-0.042.833) discloses retractable supports suitable for supporting the wire meshes before these are delivered on the stacking bed.

On the other hand, the devices specifically dealing with the problems of stacking of wire meshes entail the already mentioned drawbacks in what concern output stops.

These and other problems are obviated by a machine of the above mentioned type and having the features disclosed in the characterising part of claim 1.

The intermediate support according to the present invention has the task of supporting momentarily the meshes which arrive during the period of discharge of the stack.

The attached figures, which are given as a non-restrictive example, show the following:

Fig.1      shows from above an improved stacking machine for mesh of a normal type;

Fig.2      shows a vertical lengthwise section of the stacking machine of Fig.1;

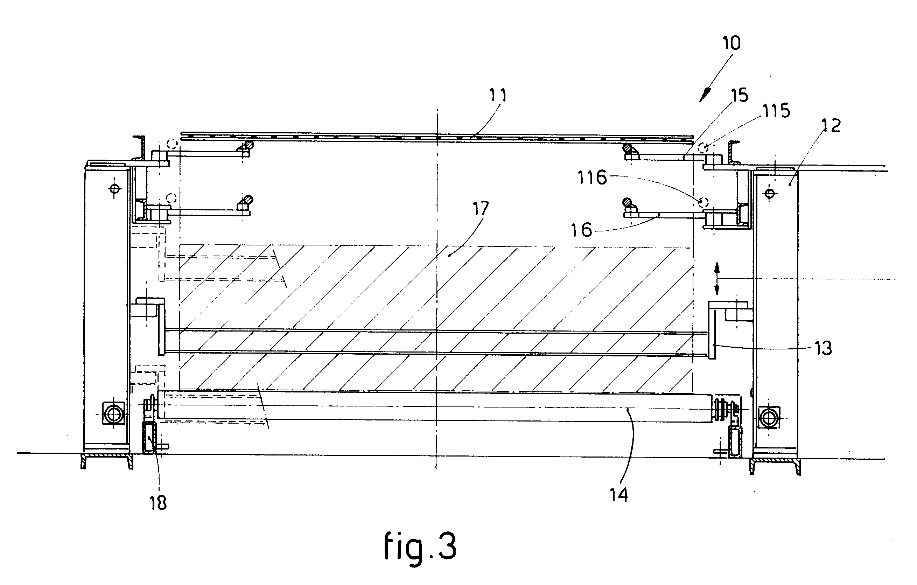

Fig.3      shows a vertical crosswise section of the stacking machine of Fig.1.

A traditional stacking machine comprises a base frame 18 on which is located a discharge roller conveyor 14.

A vertically movable bed 13 is included in cooperation with the discharge roller conveyor 14 and is able to hold units of mesh and stack them, so that when a stack 17 has been formed, the movable bed 13 descends below the roller conveyor 14, which is thus enabled to discharge the stack 17.

The vertically movable bed 13 cooperates with lateral uprights 12 in the vertical movement of the bed.

Retractable supports 15 for mesh are located on the lateral uprights 12 and can take up two positions, one of them being an extended position above the stack of mesh, while the other is a position 115 parallel to and outside the stack.

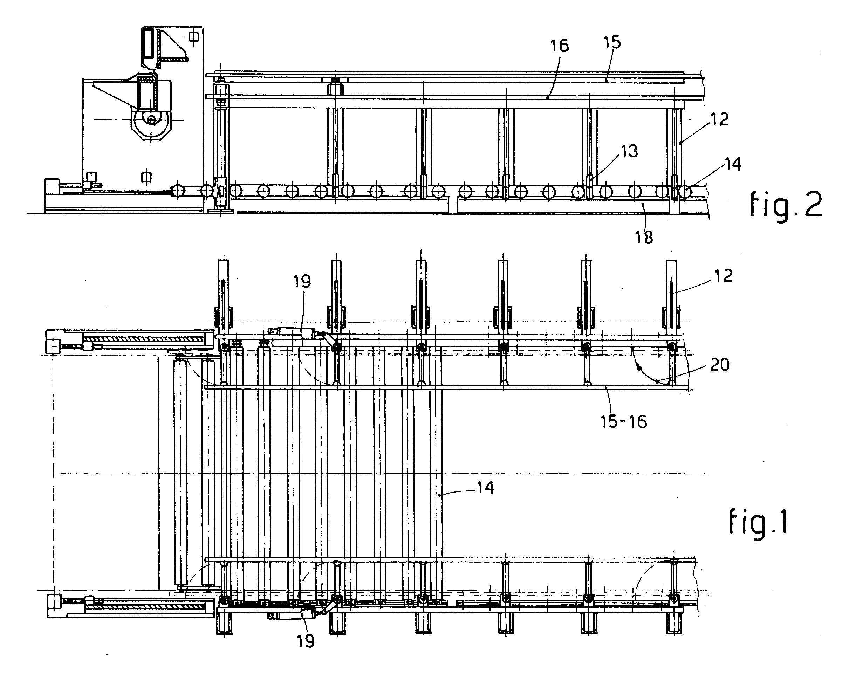

The retractable supports 15 for the mesh are operated by jacks 19, which make the retractable supports rotate 20 in the manner shown in Fig.1.

So far the description covers also the stacking machines for mesh of a known type.

According to the invention intermediate supports 16 for the mesh are provided below the retractable supports 15 and between the retractable supports 15 and the stack 17 of mesh, thus enabling the mesh 11 to be placed transiently on the intermediate supports 16 while the stack is being discharged, this enables the production line to work continuously without interruptions and to obtain an increase in output of about 20-25%, for instance, with electrically welded units of mesh three metres long.

The intermediate supports 16 can be rotatably folded like the retractable supports 15 and can take up a position to contact the mesh 11 and a position 116 in which they substantially do not contact the mesh.

The examples of the invention provided in the figures show retractable supports of a given type but other types can be included since the invention is realised with intermediate supports 16 able to provide transient support for mesh 11 arriving and positioned on the retractable supports while a stack 17 already formed is discharged; in this way the retractable supports 15 are freed without thereby affecting the production line, which can maintain its output unchanged.

**Claims**

1. Machine (10) for continuously stacking wire mesh such as welded mesh for the reinforcement of concrete, the machine comprising a retractible mesh-support equipment (15) to guide the mesh (11) leaving its production machine to a position above the depositing zone of a movable-bed stacking device (13) and to release the mesh (11) above such depositing zone, the movable-bed stacking device (13) being adapted to move vertically from a first high loading position to a low depositing position for delivering the finished stack of mesh (17) onto a roller conveyor (14) which discharges said stack (17), the machine (10) being characterized in that a second retractible intermediate mesh-support equipment (16) is included in an intermediate position between the retractible mesh-support equipment (15) and the movable-bed stacking device (13) so as to support the mesh (11) transiently on two parallel sides while the formed stack (17) is discharged, and to deliver the mesh (11) onto the movable-bed stacking device (13) in the first high loading position of the same.

**Revendications**

1. Machine (10) pour empiler en continu du treillis, comme des panneaux de treillis soudés servant d'armature pour le béton, cette machine comprenant un équipement de support (15) rétractable pour les panneaux de treillis destiné à guider les panneaux de treillis (11) qui quittent la machine de fabrication vers une position située au-dessus de la zone de dépôt d'un dispositif empileur à plate-forme mobile (13) et à libérer les panneaux de treillis (11) au-dessus de cette zone de dépôt, le dispositif empileur à plate-forme mobile (13) étant à même de se déplacer verticalement à partir d'une première position de chargement haute vers une position de dépôt basse en vue de décharger la pile de panneaux de treillis terminée (17) sur un transporteur à rouleaux (14) qui évacue cette pile (17), la machine (10) étant caractérisée en ce qu'un second équipement de support intermédiaire rétractable (16) pour les panneaux de treillis est prévu dans une position intermédiaire entre l'équipement de support rétractable (15) et le dispositif empileur à plate-forme mobile (13) de manière à supporter les panneaux de treillis (11) transitoirement sur deux côtés parallèles, tandis que la pile (17) formée est évacuée, et à décharger les panneaux de treillis (11) sur le dispositif empileur à plate-forme mobile (13), dans la première position de chargement haute de ce dernier.

**Patentansprüche**

1. Vorrichtung zum kontinuierlichen Stapeln von Drahtgittern, z.B. geschweißten Gittern für die Bewehrung von Beton, mit einer zurückziehbaren Trageinrichtung (15) zur Führung des seine Herstellungsmaschine verlassenden Gitters (11) in eine Stellung oberhalb des Ablagebereiches eines bewegbaren Stapelbettes (13), und zum Abwurf des Gitters (11) auf diesen Ablagebereich, wobei das Stapelbett (13) von einer ersten hohen Ladestellung in eine untere Ablegestellung zum Übergeben des fertigen Gitterstapels (17) an einen Rollenförderer (14), der den Stapel (17) abzieht, vertikal bewegbar ist, **dadurch gekennzeichnet,** daß eine zweite zurückziehbar Gittertrageinrichtung (16) zwischen der zurückziehbaren Gittertrageinrichtung (15) und dem bewegbaren Stapelbett (13) vorgesehen ist, die das Gitter (11) vorübergehend an zwei parallelen Seiten trägt, während der gebildete Stapel (17) abgezogen wird und die das Gitter (11) an das bewegbare Stapelbett (13) in der ersten hohen Ladestellung desselben übergibt.

fig.2

fig.1

fig.3